# DEMANDE DE BREVET EUROPEEN

(11) **EP 1 864 787 A1**
(43) Date de publication de la demande: **12.12.2007**
(21) Numéro de dépôt: 07109643.2
(22) Date de dépôt: 05.06.2007
(51) Int. Cl.: B29D 30/30

(54) **Procédé de fabrication d'un pneumatique autoporteur et dispositifs pour la fabrication d'un tel pneumatique**

(30) Priorité: 07.06.2006 FR 0652044
(71) Demandeur: Société de Technologie Michelin, 63000 Clermont-Ferrand (FR); Michelin Recherche et Technique S.A., 1763 Granges-Paccot (CH)
(72) Inventeur: Beaudonnet, Christian, 63000 Clermont-Ferrand (FR); Hinc, Henri, 63540 Romagnat (FR); Reuwer, Mike, Simpsonville, SC 29681 (US); Stahl, David, Mauldin, SC 29662 (US); Auclair, Jacques, 63800 Cournon d'Auvergne (FR)
(74) Mandataire: de la Bigne, Guillaume Michel Marie

(57) **Abrégé**

Dans ce procédé de fabrication d'un pneumatique autoporteur comprenant des gommes de renfort (22) situées dans la zone intérieure des flancs, on réalise un empilement cylindrique de plusieurs couches comprenant une couche constituée par une nappe de renfort carcasse (14) et une couche constituée par seulement une partie (30) d'une gomme d'étanchéité intérieure du pneumatique. On conforme l'empilement cylindrique pour former une ébauche de pneumatique (32), et on dépose sur la partie (33) non recouverte par la gomme d'étanchéité intérieure de l'ébauche de pneumatique (32), le reste des couches comprenant notamment la gomme de renfort (22).

## Description

La présente invention concerne un procédé de fabrication d'un pneumatique autoporteur et des dispositifs de fabrication d'un tel pneumatique.

Un pneumatique autoporteur est un pneumatique dont les flancs sont renforcés pour limiter leur affaissement en cas de crevaison ou de sous-gonflage.

On connaît dans l'état de la technique, un pneumatique autoporteur comprenant :
- une nappe de renfort carcasse, par exemple composée de renforts textiles ou métalliques enrobés dans un mélange caoutchouteux,
- une masse de gomme disposée entre la nappe de renfort carcasse et le volume intérieur du pneumatique, la masse de gomme comportant :
   o une masse de gomme d'étanchéité intérieure, parfois appelée gomme intérieure, délimitée par une surface interne en contact avec l'air intérieur au pneumatique,
   o une masse de gomme de renfort, généralement de forte épaisseur, intercalée dans au moins un flanc du pneumatique entre la nappe de renfort carcasse et la gomme intérieure.

On connaît dans l'état de la technique un procédé de fabrication d'un pneumatique autoporteur, du type comprenant les étapes suivantes :
- on réalise un empilement cylindrique de plusieurs couches comprenant une couche constituée par la nappe de renfort carcasse et une couche constituée par au moins une partie de la masse de gomme d'étanchéité intérieure,
- on conforme l'empilement cylindrique en une ébauche de pneumatique dont la forme est généralement toroïdale et proche de celle du pneumatique.

Les couches de gomme que l'on empile sont également parfois appelées « profilés ».

L'empilement cylindrique est généralement réalisé sur un tambour cylindrique, parfois également appelé tambour d'assemblage. La conformation peut également être réalisée sur des moyens spécifiques aptes à conférer la forme toroïdale à l'ébauche de pneumatique.

Ainsi, sur le tambour d'assemblage, on peut définir deux zones latérales qui, après conformation, donneront la forme des flancs du pneumatique et une zone centrale qui, après conformation, donnera la forme de la partie centrale du pneumatique située sous la bande de roulement.

Dans le procédé de l'état de la technique, l'empilement cylindrique est réalisé en déposant tout d'abord, sur le tambour d'assemblage de forme généralement cylindrique, une couche constituée par la totalité de la masse de gomme d'étanchéité intérieure. Etant donné que la masse de gomme intérieure d'un pneumatique recouvre l'intégralité de sa surface interne (c'est-à-dire à la fois les flancs et la zone centrale), la couche de gomme intérieure est déposée de façon à recouvrir sensiblement toute la surface du tambour d'assemblage, c'est-à-dire à la fois les deux zones latérales et la zone centrale.

Ensuite, on dépose la couche de gomme de renfort sur la couche de gomme intérieure. Etant donné que la gomme de renfort est destinée à être positionnée uniquement dans les flancs du pneumatique, la couche de gomme de renfort est déposée en deux parties distinctes, sur la couche de gomme intérieure, uniquement dans les deux zones latérales du tambour d'assemblage.

Enfin, on dépose la couche constituée par la nappe de renfort carcasse sur l'empilement de la gomme intérieure et de la gomme de renfort. Etant donné que la nappe de renfort carcasse est localisée aussi bien dans les flancs du pneumatique que dans sa partie centrale, la couche constituée par la nappe de renfort carcasse est déposée sur toute la surface du tambour d'assemblage, à la fois dans les zones latérales et dans la zone centrale.

Une fois l'empilement réalisé, on procède à la conformation de cet empilement cylindrique pour le transformer en une ébauche de pneumatique.

Dans le procédé de l'état de la technique, la gomme de renfort ne recouvre pas intégralement la couche de gomme intérieure et forme donc des surépaisseurs locales. Du fait de ces surépaisseurs locales, la pose de la nappe de renfort carcasse sur le tambour d'assemblage est une opération délicate et complexe. La présence de ces surépaisseurs contribue à déformer la nappe de renfort carcasse lors de sa pose et lors de la conformation. Il existe en outre des risques d'emprisonner de l'air entre la nappe de renfort carcasse, la gomme d'étanchéité intérieure et la gomme de renfort. Or, on sait que la qualité et la fiabilité d'un pneumatique dépendent pour beaucoup du positionnement correct de la nappe de renfort carcasse et notamment de la bonne orientation des fils de renfort qui la composent.

Pour remédier à ces inconvénients, un procédé de fabrication connu consiste à utiliser un tambour d'assemblage dont la surface externe comprend, dans chaque zone latérale, une gorge annulaire coaxiale de profondeur sensiblement égale à l'épaisseur de la gomme de renfort. Lors de l'empilement, la gomme de renfort est déposée dans les gorges si bien qu'elle ne forme pas de surépaisseurs locales. La nappe de renfort carcasse peut donc être posée sur une surface sensiblement plane. Ce procédé présente néanmoins l'inconvénient de nécessiter la conception et la fabrication de tambours d'assemblage spécifiques à chaque type de pneumatique à fabriquer.

L'invention a donc pour but de proposer un procédé de fabrication d'un pneumatique autoporteur permettant l'utilisation d'un tambour d'assemblage standard et permettant d'obtenir un pneumatique autoporteur de bonne qualité.

A cet effet, l'invention a pour objet un procédé de fabrication d'un pneumatique autoporteur, du type précité, caractérisé en ce que :
- on réalise l'empilement cylindrique en empilant une couche constituée par seulement une partie de la masse de gomme d'étanchéité intérieure, de sorte qu'après l'étape de conformation, une partie intérieure de l'ébauche de pneumatique correspondant sensiblement à l'emplacement de la masse de gomme de renfort n'est pas recouverte par de la gomme d'étanchéité intérieure et demeure en contact avec l'air intérieur à l'ébauche de pneumatique,
- après conformation, on dépose le reste de la masse de gomme sur la partie découverte de l'intérieur de l'ébauche de pneumatique, le reste de la masse de gomme comprenant la masse de gomme de renfort et le reste de la masse de gomme d'étanchéité intérieure qui n'a pas été déposée avant conformation.

Le reste de la masse de gomme comprend la masse de gomme de renfort, et le reste de la gomme intérieure qui n'a pas été déposé lors de la réalisation de l'empilement cylindrique, et éventuellement une gomme de liaison entre la gomme d'étanchéité intérieure et la gomme de renfort.

Grâce à l'invention, aucune couche de gomme de renfort de forte épaisseur n'est empilée sur le tambour d'assemblage. Par conséquent, il est possible de réaliser l'empilement de la gomme intérieure et de la nappe de renfort carcasse sur un tambour d'assemblage standard sans que ne se posent les problèmes de l'état de la technique lors de la pose de la nappe de renfort carcasse.

Un procédé de fabrication d'un pneumatique de type autoporteur selon l'invention peut en outre comprendre l'une ou plusieurs des caractéristiques suivantes.
- On forme le reste de la masse de gomme par enroulement de spires d'un cordon continu de gomme, le cordon étant par exemple formé par extrusion. L'opération d'extrusion est particulièrement simple et rapide à mettre en oeuvre.
- On dépose le cordon de gomme directement sur la partie découverte de l'intérieur de l'ébauche de pneumatique.
- On dépose le cordon de gomme sur un support pour former le reste de la masse de gomme puis on rapporte le reste de la masse de gomme sur la partie découverte de l'intérieur de l'ébauche de pneumatique.

L'invention a également pour objet un dispositif pour la fabrication d'un pneumatique autoporteur selon un procédé tel que précédemment défini, caractérisé en ce qu'il comprend, pour déposer le reste de la masse de gomme sur la partie découverte de l'intérieur de l'ébauche de pneumatique :
- des moyens de mise en rotation de l'ébauche de pneumatique autour de son axe, par exemple un réceptacle rotatif,
- des moyens de génération d'un cordon de gomme, par exemple une tête d'extrudeuse,
- des moyens de déplacement des moyens de génération d'un cordon de gomme, par exemple un bras articulé portant la tête d'extrudeuse.

L'invention a également pour objet un dispositif pour la fabrication d'un pneumatique autoporteur selon un procédé tel que précédemment défini, caractérisé en ce qu'il comprend, pour déposer le reste de la masse de gomme sur la partie découverte de l'intérieur l'ébauche de pneumatique :
- un premier support pour l'ébauche de pneumatique,
- un second support pour le reste de la masse de gomme, déformable entre :
   o une première configuration dans laquelle il est apte à pénétrer dans l'espace intérieur de l'ébauche de pneumatique,
   o une seconde configuration dans laquelle il épouse sensiblement la forme intérieure de l'ébauche de pneumatique et recouvre la partie de l'intérieur de l'ébauche de pneumatique qui est découverte, et
- des moyens pour déplacer les premier et second supports l'un par rapport à l'autre.

Un dispositif selon l'invention peut en outre comprendre l'une ou plusieurs de caractéristiques suivantes.
- Le second support comprend un tambour expansible dont la surface externe forme support pour le reste de la masse de gomme, le tambour expansible étant sensiblement cylindrique dans sa première configuration et sensiblement torique dans sa seconde configuration.
- Le tambour expansible comprend une membrane souple de forme sensiblement cylindrique au repos et un dispositif de gonflage de la membrane, le tambour expansible au repos étant dans sa première configuration et le tambour expansible gonflé étant dans sa seconde configuration.
- Le tambour expansible comprend en outre des moyens de pressage placés à l'intérieur de la membrane et aptes à presser la membrane contre la surface intérieure de l'ébauche de pneumatique lorsque le tambour expansible est dans sa seconde configuration.

L'invention a également pour objet un dispositif pour la fabrication d'un pneumatique selon un procédé tel que précédemment défini, caractérisé en ce qu'il comprend, pour déposer le reste de la masse de gomme sur la partie découverte de l'intérieur de l'ébauche de pneumatique :
- un premier support pour l'ébauche de pneumatique,
- un deuxième support pour le reste de la masse de gomme,
- un troisième support muni de moyens de préhension du reste de la masse de gomme,
- des moyens de déplacement du troisième support depuis le deuxième support vers le premier support.

De manière optionnelle, le troisième support comprend un ruban métallique souple muni de ventouses formant moyens de préhension.

L'invention sera mieux comprise à la lecture de la description qui va suivre, donnée uniquement à titre d'exemple et faite en se référant aux dessins annexés dans lesquels :
- la figure 1 est un schéma selon une coupe axiale d'une partie d'un pneumatique autoporteur,
- la figure 2 est un schéma selon une coupe axiale d'un tambour d'assemblage utilisé dans un procédé de fabrication d'un pneumatique autoporteur selon l'invention,
- la figure 3 est un schéma selon une coupe axiale d'une partie d'une ébauche de pneumatique obtenue après l'étape de conformation d'un procédé selon l'invention,
- la figure 4 est une vue en perspective d'un dispositif de fabrication d'un pneumatique, selon un premier mode de réalisation de l'invention,
- la figure 5 est une vue de côté du dispositif représenté sur la figure 4,
- les figures 6a, 6b et 6c sont des vues de côté d'un dispositif de fabrication d'un pneumatique, selon un deuxième mode de réalisation de l'invention, représenté à trois instants différents de son utilisation,
- les figures 7a à 7d sont des vues de côté d'un dispositif de fabrication d'un pneumatique, selon un troisième mode de réalisation de l'invention, représenté à quatre instants différents de son utilisation.

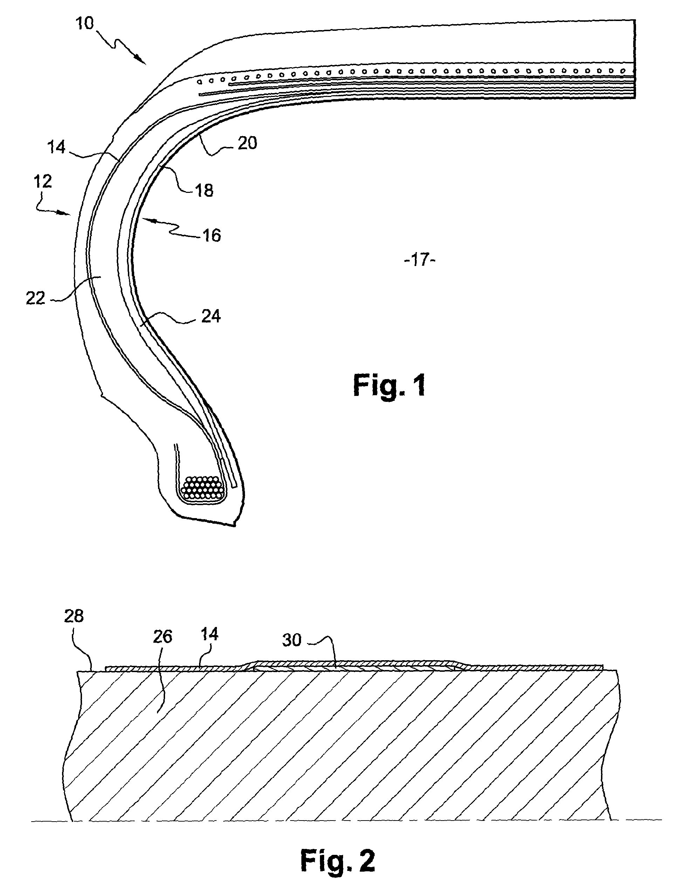

On a représenté sur la figure 1 un pneumatique autoporteur désigné par la référence générale 10. Le pneumatique 10 comprend des flancs 12 renforcés pour limiter leur affaissement en cas de crevaison ou de sous-gonflage. Le pneumatique 10 comprend une nappe de renfort carcasse 14, et une masse de gomme 16, disposée entre la nappe de renfort carcasse 14 et le volume intérieur 17 du pneumatique. La masse de gomme 16 comprend notamment une masse de gomme d'étanchéité intérieure 18, délimitée par une surface interne 20 en contact avec l'air intérieur 17 du pneumatique 10, et une masse de gomme de renfort 22 du flanc 12, généralement de forte épaisseur, intercalée dans les flancs 12 du pneumatique 10 entre la nappe de renfort carcasse 14 et la gomme intérieure 18. Le pneumatique 10 comprend en outre une gomme de liaison 24 intercalée, dans le flanc 12 du pneumatique 10, entre la gomme de renfort 22 et la gomme intérieure 18.

L'ensemble de la description est basé sur la réalisation d'un pneumatique autoporteur comportant une seule nappe de renfort carcasse. Il va de soi que les mêmes dispositions s'appliquent pour le cas où le pneumatique comporte un nombre supérieur de nappes de renfort carcasse.

On a représenté sur la figure 2 une partie d'un tambour d'assemblage cylindrique 26 selon une coupe axiale. Le tambour cylindrique 26 comprend une surface externe 28 sur laquelle sont déposés les différents composants du pneumatique sous forme de couches ou de profilés.

Le procédé selon l'invention de fabrication du pneumatique 10 comprend les étapes suivantes.

Tout d'abord, on réalise, sur le tambour d'assemblage 26, un empilement cylindrique de plusieurs couches des composants du pneumatique. La première couche déposée sur la surface externe 28 du tambour d'assemblage 26 est constituée par seulement une partie 30 de la gomme d'étanchéité intérieure 18. La partie 30 correspond à la partie centrale de la gomme intérieure 18, située sensiblement au sommet du pneumatique 10, sous la bande de roulement et éventuellement la partie de la gomme d'étanchéité située à proximité des talons du pneumatique.

La deuxième couche déposée sur le tambour d'assemblage 26 et qui recouvre notamment la partie 30 de la gomme intérieure 18 est constituée par la nappe de renfort carcasse 14. Cet empilement est représenté sur la figure 2. Etant donné que seule une partie 30 centrale de la gomme intérieure 18 est déposée sur le tambour d'assemblage 26, la nappe de renfort carcasse 14, tel que cela est illustré à la figure 2, n'est recouverte que partiellement par cette partie 30.

L'assemblage peut se poursuivre de manière tout à fait conventionnelle et connue en disposant les anneaux de renfort des bourrelets, les gommes de renfort de la zone basse et les gommes destinées à former les flancs extérieurs.

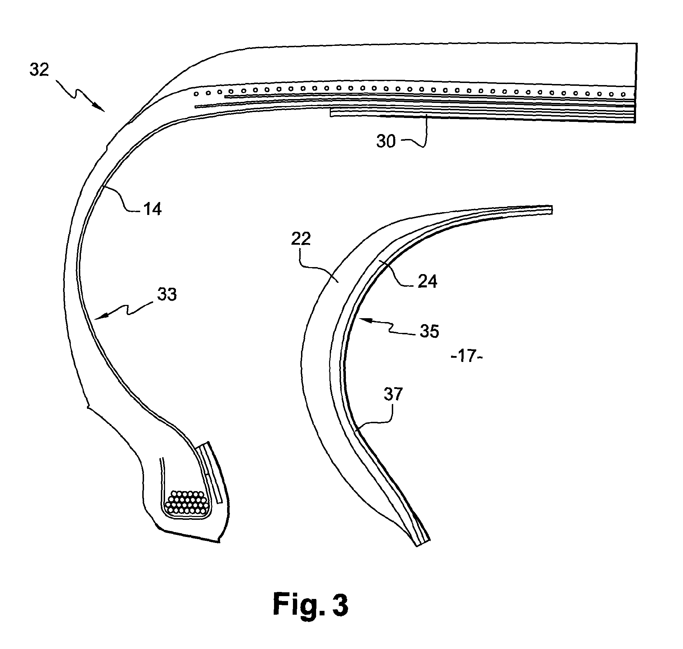

L'étape suivante du procédé consiste à conformer l'empilement cylindrique pour le faire passer de la forme cylindrique à une forme sensiblement toroïdale. On obtient ainsi une ébauche 32 de pneumatique représentée sur la figure 3.

Au cours d'étapes suivantes, d'autres couches de matériaux peuvent être déposées sur l'ébauche 32, notamment une couche de gomme formant la bande de roulement.

L'ébauche 32 de pneumatique obtenue après conformation est représentée sur la figure 3. On constate qu'une partie intérieure 33 de l'ébauche 32 de pneumatique correspondant sensiblement à l'emplacement de la masse de gomme de renfort 22 n'est pas recouverte par la gomme d'étanchéité intérieure 18 et demeure en contact avec l'air intérieur 17 à l'ébauche 32 de pneumatique. Dans l'exemple représenté, il n'y a pas de gomme intermédiaire entre la nappe de renfort carcasse 14 et la masse de gomme de renfort 22 si bien que dans la partie intérieure 33 de l'ébauche 32, la nappe de renfort carcasse 14 est découverte et en contact avec l'air intérieur 17 à l'ébauche 32 de pneumatique.

Pour achever la fabrication du pneumatique, il faut donc déposer le reste 35 de la masse de gomme 16 sur la partie découverte de la nappe carcasse 14. Le reste 35 de la masse de gomme 16 comprend notamment la totalité de la masse de gomme de renfort 22, la gomme de liaison 24 et le reste 37 de la masse de gomme d'étanchéité intérieure 18, complémentaire de la partie 30 de la gomme intérieure 18 déjà déposée.

On va décrire par la suite trois dispositifs de fabrication d'un pneumatique, selon l'invention, permettant de déposer le reste 35 de la masse de gomme 16 sur la partie découverte de la nappe de renfort carcasse 14 de l'ébauche 32 de pneumatique, c'est-à-dire sur l'intérieur des flancs 12 du pneumatique 10.

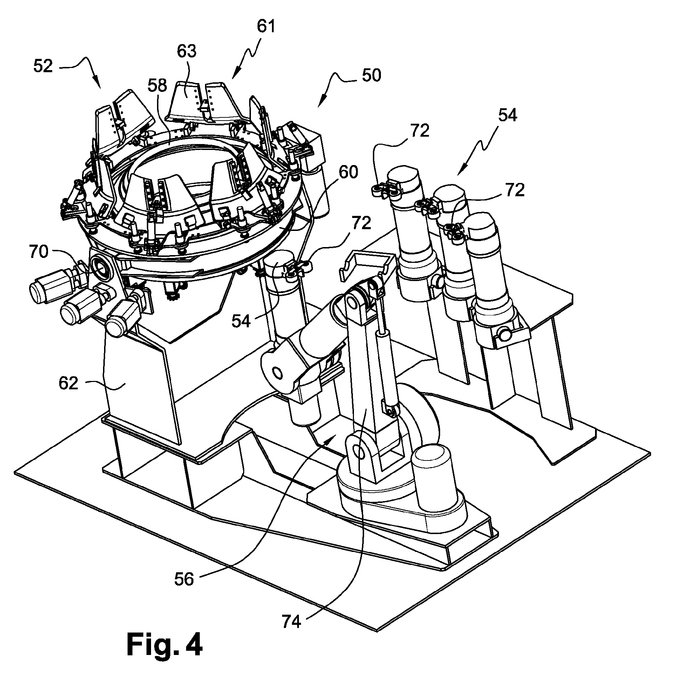

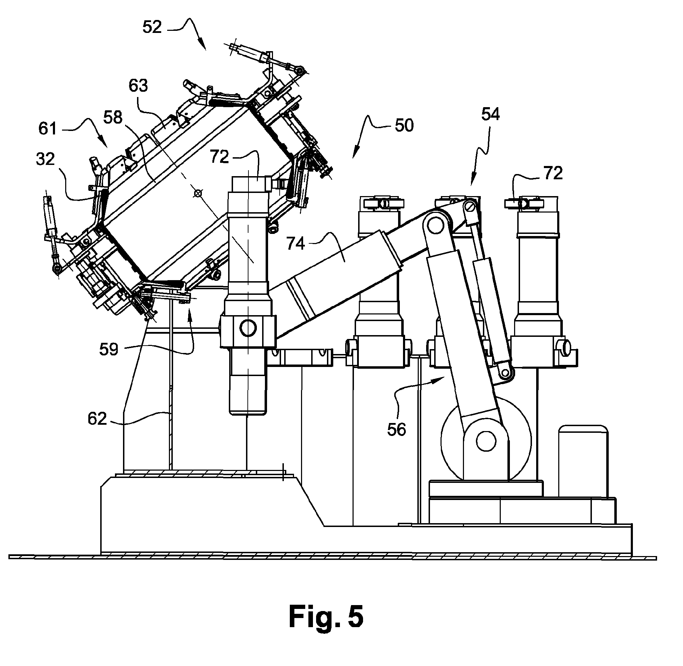

Un premier dispositif 50 est représenté sur les figures 4 et 5. Le dispositif 50 comprend des moyens 52 de mise en rotation de l'ébauche 32 de pneumatique autour de son axe, des moyens 54 de génération d'un cordon de gomme et des moyens 56 de déplacement des moyens de génération 54.

Les moyens 52 de mise en rotation de l'ébauche 32 de pneumatique autour de son axe comprennent un réceptacle 58 porté par un support basculant 60, lui-même porté par un bâti fixe 62.

Le réceptacle 58 est conformé pour accueillir l'ébauche 32 de pneumatique tout en rendant accessible la surface intérieure de ladite ébauche. A cet effet, le réceptacle 58 est de forme sensiblement cylindrique et comprend un flanc indéformable 59 et un flanc déformable 61.

Le flanc déformable 61 est apte à adopter une position de chargement et une position de retenue de l'ébauche de pneumatique. A cet effet, le flanc déformable 61 comprend une pluralité de pétales articulés 63, actionnables sous l'effet de leviers et de vérins.

Le réceptacle 58 est relié au support basculant 60 par l'intermédiaire de moyens d'articulation matérialisant un axe de rotation du réceptacle 58 par rapport au support basculant 60. Les moyens d'articulation comprennent notamment des roulements placés entre le réceptacle 58 et le support basculant 60.

Le dispositif 50 comprend en outre des moyens motorisés d'entraînement en rotation du réceptacle 58 par rapport au support basculant 60. Ces moyens motorisés d'entraînement en rotation comprennent une crémaillère portée par le réceptacle 58 et un moteur relié à un pignon d'entraînement de la crémaillère, porté par le support basculant 60. Le support basculant 60 est relié au bâti 62 par l'intermédiaire d'un moyen d'articulation 70 autour d'un axe de basculement. L'axe de basculement du support basculant 60 par rapport au bâti 62 est sensiblement confondu avec un diamètre du réceptacle 58.

Les moyens 54 de génération d'un cordon de gomme comprennent des têtes d'extrudeuse 72. Comme représenté sur les figures 4 et 5, le dispositif 50 comprend quatre têtes d'extrudeuse 72 aptes à générer des cordons de différents types de gommes.

Les moyens 56 de déplacement des têtes d'extrudeuse 72 comprennent un bras articulé 74 apte à prendre une tête d'extrudeuse 72 et à la déplacer vers l'ébauche 32 de pneumatique.

Ainsi, la dépose du reste 35 de la masse de gomme 16 sur la partie 33 non recouverte de l'intérieur de l'ébauche 32 de pneumatique est réalisée de la manière suivante, représentée sur la figure 5.

Le bras articulé 74 déplace la tête d'extrudeuse 72 de la gomme désirée de façon à ce qu'elle soit en regard de la partie 33 découverte de la nappe de renfort carcasse 14 à l'intérieur de l'ébauche 32 de pneumatique situé sur la face interne du flanc 12 de l'ébauche 32 de pneumatique. Les moyens motorisés d'entraînement entraînent en rotation le réceptacle 58 par rapport au support basculant 60.

L'extrudeuse 72 génère un cordon continu de gomme qui, du fait de la rotation du réceptacle 58, forme un enroulement de spires jointives et juxtaposées les unes par rapport aux autres. Ce dépôt de gomme est fait directement sur la partie 33 découverte de la nappe de renfort carcasse 14.

Pour déposer les spires les unes à côté des autres, le bras articulé 74 déplace la tête d'extrudeuse 72 à mesure que le réceptacle 58 tourne.

Une fois que le dépôt de gomme est réalisé, le bras articulé prend une autre tête d'extrudeuse pour déposer un autre type de gomme. Dans la configuration choisie pour illustrer l'invention, la première gomme déposée sur la nappe de renfort carcasse 14 est la gomme de renfort 22, la deuxième gomme est la gomme de liaison 24 et la troisième gomme est le reste 37 de la gomme intérieure 18.

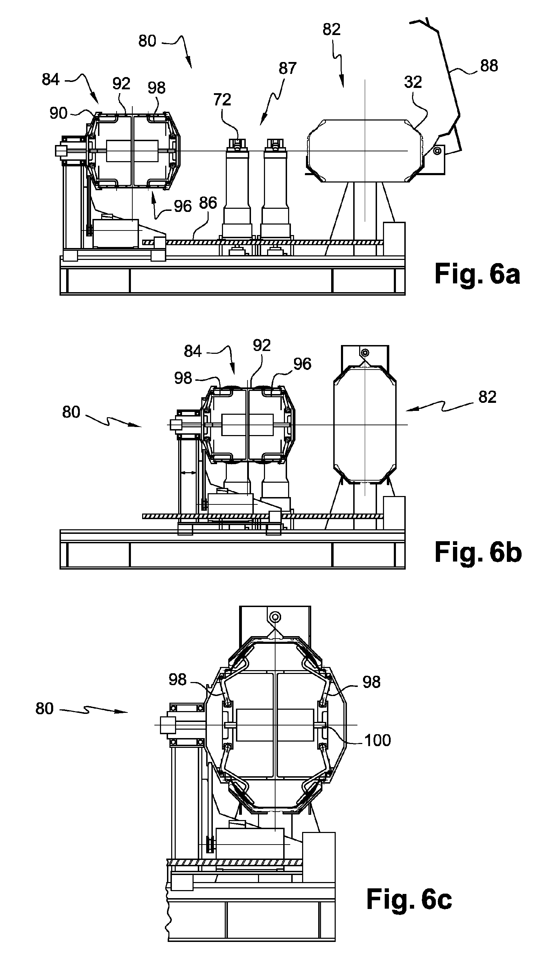

Un deuxième dispositif 80 de fabrication d'un pneumatique est représenté sur les figures 6a à 6c. Ce dispositif 80 comprend un premier support 82 pour l'ébauche 32 de pneumatique, un second support 84 pour le reste 35 de la masse de gomme 16 à déposer sur la partie découverte de la nappe de renfort carcasse 14 de l'ébauche 32 de pneumatique et des moyens 86 pour déplacer les premier 82 et second 84 supports l'un par rapport à l'autre.

Le dispositif 80 comprend également des moyens 87 de génération d'un cordon de gomme comprenant deux têtes d'extrudeuse 72. Initialement, les moyens 87 sont disposés entre les premier 82 et second 84 supports.

Le premier support 82 pour l'ébauche 32 de pneumatique comprend un réceptacle 88 rotatif enserrant l'ébauche 32 de pneumatique par sa surface extérieure de sorte que l'intérieur de l'ébauche 32 de pneumatique est accessible.

Le second support 84 pour le reste de la masse de gomme comprend un tambour expansible 90 dont la surface externe forme support pour le reste 35 de la masse de gomme 16.

Le tambour expansible 90 est déformable entre une première configuration, représentée sur la figure 6a, dans laquelle il est sensiblement cylindrique et il est apte à pénétrer dans l'espace intérieur de l'ébauche 32 de pneumatique, et une seconde configuration, représentée sur la figure 6c, dans laquelle il est sensiblement torique et épouse sensiblement la forme intérieure de l'ébauche 32 de pneumatique.

Le tambour expansible 90 comprend une membrane souple 92 de forme sensiblement cylindrique au repos et un dispositif de gonflage de la membrane. Le tambour expansible 90 comprend en outre des moyens 96 de pressage placés à l'intérieur de la membrane 92 comprenant des leviers 98 actionnés par des vérins 100.

Le procédé d'utilisation de ce dispositif 80 est décrit par la suite en référence aux figures 6a à 6c. Tout d'abord, comme représenté sur la figure 6a, l'ébauche 32 de pneumatique est placée dans le réceptacle 88.

Ensuite, comme représenté sur la figure 6b, le réceptacle 88 est orienté de façon à être dans une position sensiblement coaxiale au tambour expansible 90. Le tambour expansible 90 est déplacé en regard des têtes d'extrudeuse 72 grâce aux moyens 86. Le tambour expansible 90 est ensuite mis en rotation et les têtes d'extrudeuse 72 sont mises en fonctionnement de façon à déposer un cordon de gomme sur la membrane souple 92 formant la surface externe du tambour expansible 90.

Plusieurs types de gomme peuvent être déposés successivement sur le tambour expansible 90 de sorte qu'il est possible de déposer le reste 35 de la masse de gomme 16 sur l'ébauche 32 de pneumatique en une seule opération. Puis, les moyens 86 pour déplacer les supports entre eux sont actionnés de façon à faire pénétrer le tambour expansible 90 à l'intérieur de l'ébauche 32 de pneumatique.

Ensuite, le dispositif de gonflage et les vérins 100 agissant sur les leviers 98 sont actionnés de façon à mettre la membrane souple 92 du tambour expansible 90 dans sa seconde configuration, c'est-à-dire à mettre la surface externe du tambour expansible 90 en contact avec la surface interne de l'ébauche 32 de pneumatique.

Ainsi, et comme représenté sur la figure 6c, le reste 35 de la masse de gomme 16 déposé sur la membrane du tambour expansible 90 vient se positionner contre les parties de la nappe de renfort carcasse 14 découvertes de l'ébauche 32 de pneumatique.

Les leviers 98 viennent appuyer le reste 35 de la masse de gomme 16 contre la nappe de renfort carcasse 14 de façon à améliorer sa fixation. Au cours d'étapes ultérieures non représentées, le tambour expansible 90 reprend sa première configuration et est extrait du pneumatique ainsi formé.

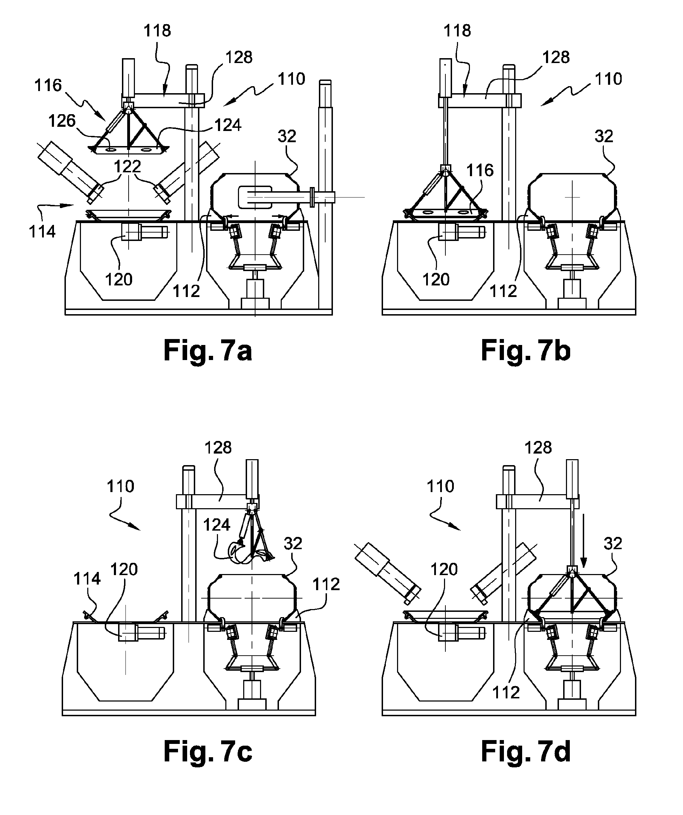

Un troisième dispositif 110 de fabrication d'un pneumatique est représenté sur les figures 7a à 7d. Ce dispositif 110 comprend un premier support 112 pour l'ébauche 32 de pneumatique, un deuxième support 114 pour le reste de la masse de gomme, un troisième support 116 muni de moyens de préhension du reste 35 de la masse de gomme 16.

Le dispositif 110 comprend en outre des moyens 118 de déplacement du troisième support 116 depuis le deuxième support 114 vers le premier support 112. La forme générale du deuxième support 112 est sensiblement identique à celle d'un flanc de l'ébauche 32 de pneumatique. Cette forme est sensiblement tronconique.

Le dispositif 110 comprend également des moyens 120 de mise en rotation du deuxième support 114. Le dispositif 110 comprend des têtes d'extrudeuse 122 aptes à déposer un cordon de gomme sur le deuxième support 114 de façon à former le reste 35 de masse de gomme 16.

Le troisième support 116 comprend un ruban métallique souple 124 muni de ventouses 126 formant moyens de préhension du reste 35 de masse de gomme. Le troisième support 116 est porté par un bras articulé 128 formant moyens 118 de déplacement du troisième support 116. L'extrémité du bras articulé 128 portant le ruban métallique souple 124 comprend un ensemble de tiges souples aptes à adopter une première configuration écartée, dans laquelle le ruban est déployé, et une seconde configuration resserrée dans laquelle le ruban en replié.

Le procédé de dépose de gomme au moyen de ce dispositif 110 est le suivant.

Au cours d'une première étape représentée sur la figure 7a, les têtes d'extrudeuse 122 déposent sur le deuxième support 114 en rotation un cordon de gomme de façon à former le reste 35 de la masse de gomme par enroulement de spires de gomme.

Au cours d'une étape suivante représentée sur la figure 7b, le ruban métallique souple 124 vient au contact du reste 35 de masse de gomme déposée par les têtes d'extrudeuse 122. Par action des ventouses 126, le troisième support 116 prend le reste 35 de masse de gomme.

Au cours d'une étape suivante représentée sur la figure 7c, le bras articulé 128 déplace le ruban métallique souple 124 comprenant le reste 35 de masse de gomme depuis le deuxième support 114 vers le premier support 112. Pour pouvoir faire passer le ruban métallique souple à l'intérieur de l'ébauche, les tiges souples du bras articulé adoptent leur seconde position resserrée.

Enfin, au cours d'une dernière étape représentée sur la figure 7d, les tiges souples s'écartent de sorte que le ruban métallique souple se déploie, reprend sa forme sensiblement tronconique et vient se plaquer contre la partie découverte de la nappe de renfort carcasse de l'ébauche de pneumatique. Cela permet donc de déposer le reste de masse de gomme à l'endroit désiré. Ensuite, les têtes d'extrudeuse déposent sur le deuxième support la masse de gomme qui est destinée à être déposée sur l'autre flanc de l'ébauche de pneumatique.

Les différentes étapes qui viennent d'être décrites sont alors mises en oeuvre à nouveau pour déposer la masse de gomme restante sur le second flanc de l'ébauche de pneumatique.

## Revendications

1. Procédé de fabrication d'un pneumatique autoporteur (10) comprenant :
- une nappe de renfort carcasse (14), par exemple composée de renforts textiles ou métalliques enrobés dans un mélange caoutchouteux,
- une masse de gomme (16) disposée entre la nappe de renfort carcasse (14) et le volume intérieur (17) du pneumatique, la masse de gomme (16) comportant :
o une masse (18) de gomme d'étanchéité intérieure, délimitée par une surface interne (20) en contact avec l'air intérieur (17) au pneumatique (10),
o une masse (22) de gomme de renfort, généralement de forte épaisseur, intercalée dans au moins un flanc (12) du pneumatique (10) entre la nappe de renfort carcasse (14) et la gomme intérieure (18),
le procédé étant du type comprenant les étapes suivantes:
- on réalise un empilement cylindrique de plusieurs couches comprenant une couche constituée par la nappe de renfort carcasse (14) et une couche constituée par au moins une partie (30) de la masse de gomme d'étanchéité intérieure (18),
- on conforme l'empilement cylindrique en une ébauche de pneumatique (32) dont la forme est généralement toroïdale et proche de celle du pneumatique,
**caractérisé en ce que** :
- on réalise l'empilement cylindrique en empilant une couche constituée par seulement une partie (30) de la masse de gomme d'étanchéité intérieure, de sorte qu'après l'étape de conformation, une partie intérieure (33) de l'ébauche de pneumatique correspondant sensiblement à l'emplacement de la masse de gomme de renfort (22) n'est pas recouverte par de la gomme d'étanchéité intérieure (18) et demeure en contact avec l'air intérieur (17) à l'ébauche de pneumatique (32),
- après conformation, on dépose le reste (35) de la masse de gomme (16) sur la partie découverte (33) de l'intérieur de l'ébauche de pneumatique (32), le reste (35) de la masse de gomme (16) comprenant la masse de gomme de renfort (22) et le reste (37) de la masse (18) de gomme d'étanchéité intérieure qui n'a pas été déposée avant conformation.

2. Procédé selon la revendication 1, dans lequel on forme le reste (35) de la masse de gomme (16) par enroulement de spires d'un cordon continu de gomme, le cordon étant par exemple formé par extrusion.

3. Procédé selon la revendication 2, dans lequel on dépose le cordon de gomme directement sur la partie découverte (33) de l'intérieur de l'ébauche (32) de pneumatique.

4. Procédé selon la revendication 2, dans lequel on dépose le cordon de gomme sur un support (84 ; 114) pour former le reste (35) de la masse de gomme (16) puis on rapporte le reste (35) de la masse de gomme (16) sur la partie découverte (33) de l'intérieur de l'ébauche (32) de pneumatique.

5. Dispositif (50) pour la fabrication d'un pneumatique autoporteur (10) selon le procédé de la revendication 3, **caractérisé en ce qu'**il comprend, pour déposer le reste (35) de la masse de gomme (16) sur la partie découverte (33) de l'intérieur de l'ébauche de pneumatique (32) :
- des moyens (52) de mise en rotation de l'ébauche de pneumatique (32) autour de son axe, par exemple un réceptacle rotatif (58),
- des moyens (54) de génération d'un cordon de gomme, par exemple une tête d'extrudeuse (72),
- des moyens (56) de déplacement des moyens (54) de génération d'un cordon de gomme, par exemple un bras articulé (74) portant la tête d'extrudeuse.

6. Dispositif (80) pour la fabrication d'un pneumatique autoporteur (10) selon le procédé de la revendication 4, **caractérisé en ce qu'**il comprend, pour déposer le reste (35) de la masse de gomme (16) sur la partie découverte (33) de l'intérieur de l'ébauche de pneumatique (32) :
- un premier support (82) pour l'ébauche de pneumatique (32),
- un second support (84) pour le reste (35) de la masse de gomme (16), déformable entre:
o une première configuration dans laquelle il est apte à pénétrer dans l'espace intérieur de l'ébauche de pneumatique (32), et
o une seconde configuration dans laquelle il épouse sensiblement la forme intérieure de l'ébauche de pneumatique (32) et recouvre la partie de l'intérieur de l'ébauche de pneumatique (32) qui est découverte, et
- des moyens (86) pour déplacer les premier (82) et second supports (84) l'un par rapport à l'autre.

7. Dispositif (80) selon la revendication 6, dans lequel le second support (84) comprend un tambour expansible (90) dont la surface externe forme support pour le reste (35) de la masse de gomme, le tambour expansible (90) étant sensiblement cylindrique dans sa première configuration et sensiblement torique dans sa seconde configuration.

8. Dispositif (80) selon la revendication 7, dans lequel le tambour expansible (90) comprend une membrane souple (92) de forme sensiblement cylindrique au repos et un dispositif de gonflage de la membrane (92), le tambour expansible (90) au repos étant dans sa première configuration et le tambour expansible (90) gonflé étant dans sa seconde configuration.

9. Dispositif (80) selon la revendication 8, dans lequel le tambour expansible (90) comprend en outre des moyens (96) de pressage placés à l'intérieur de la membrane (92) et aptes à presser la membrane (92) contre la surface intérieure de l'ébauche de pneumatique (32) lorsque le tambour expansible (90) est dans sa seconde configuration.

10. Dispositif (110) pour la fabrication d'un pneumatique autoporteur (10) selon le procédé de la revendication 4, **caractérisé en ce qu'**il comprend, pour déposer le reste (35) de la masse de gomme sur la partie découverte de l'intérieur de l'ébauche de pneumatique (32):
- un premier support (112) pour l'ébauche de pneumatique (32),
- un deuxième support (114) pour le reste de la masse de gomme (16),
- un troisième support (116) muni de moyens de préhension du reste de la masse de gomme (16),
- des moyens de déplacement du troisième support (116) depuis le deuxième support (114) vers le premier support (112).

11. Dispositif selon la revendication 10, dans lequel le troisième support (116) comprend un ruban métallique souple (124) muni de ventouses (126) formant moyens de préhension.
